# EUROPEAN PATENT APPLICATION

(11) **EP 3 848 718 A1**
(43) Date of publication of application: **14.07.2021**
(21) Application number: 21150644.9
(22) Date of filing: 08.01.2021
(51) Int. Cl.: G01S 5/18, G01S 11/16

(54) **INDOOR PRECISE POSITION SYSTEM**

(30) Priority: 09.01.2020 DK PA202000030
(71) Applicant: Gamesontrack A/S, 7500 Holstebro (DK)
(72) Inventor: Madsen, Jacob Theilgaard, 9260 Gistrup (DK); Madsen, Niels Bo Theilgaard, 7500 Holstebro (DK); Schiøler, Henrik, 9800 Hjørring (DK)
(74) Representative: Larsen & Birkeholm A/S

(57) **Abstract**

The present invention relates to an indoor Precise Position System comprising a cell-based structure which cell-based structure provides a wide modular scalability and a subscription principle for high number of moving units.

A positioning system according to the invention comprises:
- a plurality of systemtransmitters where each systemtransmitter has a unique identification code and comprises a receiver configured to constantly listening to a radio signal and a transmitter configured to transmitting an ultrasound signal, all systemtransmitters are stationary;
- one or more radiomasters where each radiomaster comprises a radio receiver configured to receive registered information from at least one server and a radio receiver configured to receive a clock signal, also each radiomaster comprises a radio transmitter configured to transmit a radio signal to a group of systemtransmitters related to the radiomaster;
- the at least one server comprises a register of all systemtransmitters of the system including a 3D position of each systemtransmitter recorded in a fixed geometry system file, a register of which radiomaster controls which systemtransmitters, a transmission schedule defining a time period or loop for each radiomaster during which time period or loop a sequence of signals are send from a radiomaster to all its related systemtransmitters, and comprises a server transmitter configured to transmit registered information and a server transmitter configured to transmit a clock signal;
- a plurality of moving units, each moving unit comprising a receiver module configured to constantly listening to radio signals from the one or more radiomasters belonging to the system and configured to receive ultrasound signals from one or more systemtransmitters;
- each moving unit comprises or has access to storage means configured to store data of the fixed geometry system and comprises or has access to a controller or processor configured to calculate the flight time for the ultrasound signals and further comprises or has access to a controller or processor configured to calculate a real-time position based on this information
wherein the radiomaster(s) is configured to transmit a radio signal at time T1 to a systemtransmitter with a specified identification code which radio signal is received at time T1 by the systemtransmitter with the specified identification code and by a receiving module of a moving unit being within range of the radio signal, the radio signal identifies the specified systemtransmitter to the moving unit.

## Description

The present invention relates to an indoor Precise Position System comprising a cell-based structure which cell-based structure provides a wide modular scalability and a subscription principle for high number of moving units.

### Background:

An indoor Precise Position system is known from US Patent: US 9,063,218 B2. This document discloses a positioning system and method particularly well-suited for indoor positioning of several idle objects or moving objects, preferably with very short time between two successive position determinations. According to the prior art document, two signals of different propagation velocities - preferably ultra-sound and radio frequency - are sent out by an object. Alternatively, the radio signal can be sent out from a central unit. According to an embodiment, the transmission takes place simultaneously. Based on the time difference between reception of the two signals at two or more base receivers, the position of the object relative to the basic positions is determined. According to all embodiments of the prior art disclosed in this document, the object or moving unit transmits signals.

### Summary of the invention

- New development towards:
   ∘ High scalability, allowing more than 1000 units to be positioned.
   ∘ Large indoor areas, crossing halls in factories, stables, and shopping malls.
   ∘ Keeping high precision with advanced algorithms.
   ∘ Avoiding the noise pitfalls using sound as measurement method.
   ∘ Enabling position of AGVs and trucks, autonomously flying drones, Trolleys in shopping malls, Warehouse moving vehicles, people in wheelchairs, etc.
- Enabling a true subscription usage.

The system uses a fixed Systemtransmitter system in a wide scale indoor area. The area is divided into minor areas each area comprising a cell comprising a group or a plurality of Systemtransmitters controlled by one Radiomaster. Each Systemtransmitter has a unique identification number and sends low frequency signals like ultrasound at a schedule synchronized for the whole system. Systemtransmitters position (3D coordinate) is recorded in the fixed system geometry file along with the Radiomaster it belongs to. The Systemtransmitter listens to its Radiomaster and sends its burst when told by the Radiomaster and then sends an acknowledgement to the Radiomaster. The Radiomaster only handshakes with the Systemtransmitters. The Radiomaster gets the transmit schedule from a central server in the system. All Radiomasters in the system are precisely clock synchronized by the server.

Any moving unit in the system has a receiver for the Radiomasters and the ultrasound signals. Each moving unit listens for a Radiomaster and listens for ultrasound bursts. The moving unit registers when one or more Radiomasters in an area informs a Systemtransmitter ID to send its burst, and when the moving unit then registers an ultrasound burst it can calculate the time of flight of the ultrasound signal. The moving unit knows the fixed system geometry and based on this and the time of flight of the ultrasound signals from the Systemtransmitters the moving unit can calculate a real-time position. The calculated positions precision will wary based on the speed of the moving unit, however when standing still we expect precision within 10 cm (down to 10 mm under ideal circumstances), and at maximum within 100 cm (down to 10 cm under ideal circumstances) when moving. The precision scales inversely with the speed of the moving unit (slower movement gives better precision). Any moving unit can use the positions for display, accumulation of position data, or transmit the position data to a central server if relevant. Since the moving unit only operates as a subscriber (listening) the number of moving units in the system can be very high (limited only by the physical space available).

Compared to normal position systems based on radio and ultrasound as disclosed in the above prior art patent, the uniqueness of the present invention is that all moving units just listen to Radiomasters and to ultrasound signals without handshaking, and that the system may comprise multiple Radiomasters operating on the very same frequency across all areas without interference problems. The avoidance of multi sound and conflicting Radiomasters in any one area is controlled in the set-up of the Radiomasters and Systemtransmitters and their internal schedules. This can easily be expanded with another area with a new Radiomaster section.

The overall scaling methods comes from the intelligent design of a Radiomaster section comprising a group of Systemtransmitters without interfering with neighboring cells. The expansion of the system will require changing the design of the cells, but the setup allows for easily updating this design. The precision comes from the fact that the system uses ultrasound as distance measurement, which is extremely precise, a new 3D positioning algorithm, and the experiences gathered over many years of working with ultrasound as a positioning tool, example avoidance of the impact sound reflections.

According to a first aspect, the invention relates to a positioning system for indoor precise positioning of moving units comprising
- a plurality of systemtransmitters where each systemtransmitter has a unique identification code and comprises a receiver configured to constantly listening to a radio signal and a transmitter configured to transmitting an ultrasound signal, all systemtransmitters are fixed units, i.e. they are stationary;
- one or more radiomasters where each radiomaster comprises a radio receiver configured to receive registered information from at least one server and a radio receiver configured to receive a clock signal, also each radiomaster comprises a radio transmitter configured to transmit a radio signal to a group of systemtransmitters related to the radiomaster;
- the at least one server comprising
   -- a register of all systemtransmitters of the system including a 3D position of each systemtransmitter recorded in a fixed geometry system file,
   -- a register of which radiomaster controls which systemtransmitters,
   -- a transmission schedule defining a time period or loop for each radiomaster during which time period or loop a sequence of signals are send from a radiomaster to all its related systemtransmitters, and
   -- comprising a server transmitter configured to transmit registered information and a server transmitter configured to transmit a clock signal;

Wherein the positioning system also comprises
- a plurality of moving units, each moving unit comprising a receiver module configured to constantly listening to radio signals from the one or more radiomasters belonging to the system and configured to receive ultrasound signals from one or more systemtransmitters;
- each moving unit comprises or has access to storage means configured to store data of the fixed geometry system and comprises or has access to a controller or processor configured to calculate the flight time for the ultrasound signals and further comprises or has access to a controller or processor configured to calculate a real-time position based on this information.

The radiomaster(s) may be configured to transmit a radio signal at time T1 to a systemtransmitter with a specified identification code which radio signal is received at time T1 by the systemtransmitter with the specified identification code and by a receiving module of a moving unit being within range of the radio signal, the radio signal identifies the specified systemtransmitter to the moving unit.

A positioning system according to the first aspect, wherein the radio transmitters of two or more radiomasters of the positioning system, optionally all radiomasters of the positioning system, may be configured to transmit radio signals on one i.e. the same frequency during operation, allowing moving units to listen to signals from two or more radiomasters in the system, e.g. all radiomasters in the system, without modifying the receiving module of the moving unit.

A positioning system according to the first aspect, wherein one or more or each moving unit of the system may be configured to operate exclusively as subscriber(s) relative to the radiomaster i.e. the moving units do not comprise a transmitter configured to transmit signals to the radiomaster(s) during operation.

A positioning system according to the first aspect, wherein each systemtransmitter of the system may be controlled by one radiomaster and the at least one server defines a group of systemtransmitters being controlled by one or by each radiomaster.

A positioning system according to the first aspect, wherein one radiomaster may be related to and may transmit signals to between 1 and 30 systemtransmitters, e.g. to between 2 and 20 systemtransmitters.

A positioning system according to the first aspect, which system may comprise at least 2 or 10 or 20 or 100 moving units, and/or which system may comprise at most 1000 or 5000 moving units.

A positioning system according to the first aspect, wherein the server transmitter may be configured to transmit the registered information from the server to the radiomaster(s) comprises an ethernet cable.

A positioning system according to the first aspect, wherein the controller or processor of the moving unit may comprise either a local microprocessor or a device connected to the moving unit e.g. by USB or by wireless communication or similar.

A positioning system according to the first aspect, wherein a moving unit may comprise means for displaying information of real-time position and/or comprises means for accumulation of position data, and/or may comprise means for real time transmitting position data to a central server or another device.

A positioning system according to the first aspect, wherein each systemtransmitter may comprise 2 or more ultrasound transmitters which ultrasound transmitters point in different directions, e.g. each systemtransmitter may comprise 3 ultrasound transmitters pointing in 3 different directions e.g. 2 ultrasound transmitters point in a horizontal directions differing between 90 and 130 degrees and 1 ultrasound transmitter points in a vertical direction, upwards or downwards, in a direction deviating between 30 and 90 degrees from horizontal.

A positioning system according to the first aspect, wherein each systemtransmitter may comprise a dynamic power capability allowing adjustment of power of transmitted signals.

A positioning system according to the first aspect, wherein each moving unit may comprise an ultrasound transducer which transducer may comprise a noise filter e.g. in form of an electronic amplifying circuit having an off level, removing sound noise significantly lower e.g. 30% lower or 50% lower or 70%, than an ultrasound burst send from a transmitter.

A positioning system according to the first aspect, wherein a time period or loop of a transmission schedule defining a transmission slot for a given radio may be between 60 and 80 ms.

A positioning system according to the first aspect, wherein the server in every transmission slot can transmit to the radios any modified or new order of the systemtransmitters, i.e. with purpose of optimizing for any actual load or behavior during a day of the moving units.

A positioning system according to the first aspect, wherein a moving unit without a previous position registration may be configured to determine from which radiomasters the moving unit is receiving signals and thus from which systemtransmitter the moving unit is receiving ultrasonic signals, making the moving unit able to calculate a first position in the system within normally 3-5 seconds.

A positioning system according to the first aspect, wherein each systemtransmitter of the system comprises a transmitter may be configured to send a radio signal to the related radiomaster confirming the working state of the systemtransmitter.

According to a second aspect the invention relates to method for detecting positions of each of a plurality of moving units in a positioning system according to claim 1-15, wherein
a) one radiomaster transmits a radio signal at time T1 to a systemtransmitter with a specified identification code;
b) the radio signal is received at time T1 by the systemtransmitter with the specified identification code and by a receiving module of a moving unit being within range of the radio signal, the radio signal identifies the specified systemtransmitter to the moving unit;
c) upon receipt of the radio signal the systemtransmitter with the specified identification code transmits an ultrasonic signal;
d) a receiving module of a moving unit within range of the ultrasonic signal receives the ultrasonic signal at time T2, and upon receipt of the ultrasonic signal, a controller either being part of the moving unit or being available to the moving unit calculates the flight time T2-T1; the receiving module is configured to distinguish a straight ultrasonic signal from a reflected signal ensuring that the ultrasonic signal is transmitted from the systemtransmitter with the specified identification code,
e) having obtained the flight time for the ultrasound signal and as the moving unit has access to data defining the position of the specified systemtransmitter, a position for the moving unit is calculated by algorithm(s) by a controller either being part of the moving unit or being available to the moving unit;
   - steps a) to e) are repeated according to a time schedule for all systemtransmitters related to the one radiomaster.

A method according to the second aspect, wherein two, more or all of the radiomasters of the system may send radio signals at one radio frequency and the receiving modules of each moving unit listens to this one radio frequency.

A method according to the second aspect, wherein one of two algorithms may be used to calculate the position of step e) based on the current state of the receiver module,
- If there is no previous position recorded position at the moving unit within a given time period, the position is calculated using a trilateration algorithm, this algorithm may need at least 3 ultrasound signals to provide enough information to calculate a position,
- If a previous position is known, a new position is calculated based on the previous position, this algorithm may need only a single ultrasound signal.

A method according to the second aspect, wherein information relating to positions of the systemtransmitters and each systemtransmitters relation to a radiomaster may be uploaded to the server during an installation process e.g. by a manual registration of the 3D position of each transmitter or e.g. by an automatic calibration process such as an reversed trilateration process.

### Key words:

Ultrasound, precise distance measurements, radio system, clock synchronization, simple calibration, high scalability, subscription-based model, Dynamic ultrasonic noise avoidance, Dynamic ultrasound levels, cell-based structure.

### List of figures:

Figure 1: Illustration of asymptotical position calculation
Figure 2: Example of a system positioned in halls and connecting hallways comprising 8 Radiomasters
Figure 3: Figure illustration separation of ultrasound signals and radio signals in time
Figure 4: Illustration of a system in which an algorithm for determining which Radiomaster is heard is applied
Figure 5: Figure illustrating change in distance versus level

### Definitions:

Measurement interval: The time interval between an ultrasonic transmit from two (or the same) Systemtransmitter belonging to one Radiomaster. The measurement interval cannot be set lower than the maximum ultrasound flight time to be utilized.

The Radiomasters duty cycle must take place in each measurement interval. A Radiomasters Duty cycle is the sequence of tasks which the Radiomaster performs for transmitters in the system, i.e. Broadcast signal to the systemtransmitters, receive an answer from the systemtransmitters and replying to the server with transmitter status.

Loop: The time it takes for one Radiomaster to perform a full roundtrip of all scheduled transmits. A loop might involve one or more transmits from the same Systemtransmitter.

Cell: A grouping of Systemtransmitters assigned to a single master.

Systemtransmitter: Device producing ultrasonic bursts when prompted by a Radiomaster, also called satellite or System transmitter.

Receiver: Device able to receive radio signals from Radiomasters and detect ultrasonic bursts.

Radiomaster: Device connected to a central system server, which informs Systemtransmitters when they should send ultrasonic bursts.

Moving unit - a unit being able to move inside a cell area or between cell areas, a moving unit may either move or stand still within a cell area during operation or may move into a cell area of the system during operation.

### Application samples

1. Tracking of shopping carts in malls or airports.
   a. Use positions for nudging customers.
   b. Use movement logs to determine optimal positions for goods.
2. Integration with Warehouse Management Systems (WMS).
   a. Determine location of forklifts.
   b. Optimize forklift movement and paths.
   c. Display path for forklifts to take.
   d. Determine location of events (i.e. shock sensor triggered).
3. Tracking and control of multiple indoor autonomous ground vehicles like robots.
4. Tracking of indoor autonomous drones.
5. Determine location of goods in warehouse
6. Optimize forklift movement in warehouse based on previously tracked positions of forklifts.
7. Real time tracking of units at central server.

### The core principles of invention:

A system consists of:
- One Server masters the whole system and provide updates and maintenance of Radiomaster units.
- The server administrates all 3D positions of all Systemtransmitters in the system. The system may comprise more than one server, provided one server runs the overall timer. A server runs:
   ∘ A scheme with the exact 3D position of all Systemtransmitters in the system
   ∘ The grouping of Systemtransmitters in separate Radiomaster groups (cells) with one Radiomaster per group (cells).
- The server directly may control one or many Radiomasters through an ethernet cable and a communication protocol.
- One Radiomaster may control a group of 1-30 Systemtransmitters.
- Radio control of all moving units in system from a Radiomaster unit.
- Many Radiomasters in the system can operate on the same frequency which allows all moving units to listen on the same frequency.
- One group of Systemtransmitters shifts to send out an ultrasonic signal at a precise time regulated by the Radiomaster, which again is regulated by the server.
- More server systems can be used together.
- A Receiver module of the moving unit listens on available Radiomasters and registers which Systemtransmitter (unique ID) is transmitting right now.
   ∘ The Receiver module detect the sending time signal and the Systemtransmitter ID.
   ∘ The Receiver module measure reception of the ultrasound burst and record the flight time.
   ∘ The Receiver module transmit to a controller (smartphone/tablet or other device) the actual flight time.
   ∘ The Receiver module wait for the next ultrasound burst from the same or another Systemtransmitter.
- The controller (Tablet/Smartphone or other device) has a copy from the server of the exact 3D position of all Systemtransmitters. Based on that copy and the continuous reception of distances from the receiver module it calculates the position of the moving unit (the receiver module).
- Two different algorithms may be used to calculate the position based on the current state of the receiver module (algorithms described in further detail in a later part of the patent).
   ∘ If there is no previous position recorded the moving unit within a given time period, the position is calculated using a trilateration algorithm. The algorithm to do this is complicated since the receiver module is constantly moving and needs 3 or 4 distances to provide enough information to calculate a position. In principles the common point of the crossing of 4 ball shells. The thickness of the shell is determined by the movement speed.
   ∘ If a previous position is known, the new position is calculated based on the previous position and the shortest distance to a ball described by the distance found based on the time of flight.
- The position of the Systemtransmitters is either calibrated from ground using a reversed trilateration method, or directly measured according to the building geometry.

This system will not work out of the box. And it will not make any accurate positions unless distances are modified, and timing is considered. The questions that need to be answered are:
How do we modify these principles to make a very accurate operating position of any moving unit in big areas?

How do we ensure that many Radiomasters can operate on the same frequency?

How do we treat the ultrasound to avoid too much resonance and to not overlap so that the measurement is exact from exactly one Systemtransmitter at a time?

And how do we organize the hundreds of Systemtransmitters in groups in a building?

And when we find that solution how do we allow any moving unit to jump in anywhere and in a few seconds be ready and understand its own position?

We use the following information or parameters to determine the positions of a moving unit:
- Clock.
- Grouping of Systemtransmitters in cells.
- Systemtransmitter sending rotation scheme.
- Timer delays.
- Smart set-up.
- Avoiding resonance, control of the ultrasound, understanding signal levels (Patent US 9,063,218 B2).
- How to optimize calculation of the position in the delicate non known moving behavior so that it will be precise.
- Understanding the changing of measured distance based on the unit's movements.

### The environment consists of:

- One or more connected buildings with one or more areas (halls) connected with hallways.
- Halls characterized with being reachable from one radiomaster.
- Hallways being the connection between Halls.
- Single large open space (i.e. Warehouses).
- Building characterized with that any point in the building can be identified through one 3D position calculated from an arbitrary selected 0,0,0. As an example all drawings of a factory or a shopping mall describe any content position in 3D coordinates from a selected 0,0,0.

### More Radio-masters to cover

All moving units in a cell of the system is controlled of the Radiomaster. A group of Systemtransmitters in a cell e.g. comprising a certain hall are controlled by one Radiomaster. The System comprises one or more Radiomasters on the very same frequency/frequencies, (i.e. a normal frequency in the ISM-band) in order to allow any moving unit to be moving from one hall covered with one Radiomaster to another area covered by a different Radiomaster.

The purpose of having a subscription-based system is that any moving unit only needs to know a simple table of all stationary System transmitter positions, and then listen to the Radiomaster broadcasting what Systemtransmitter ID is transmitting exactly now. It may then receive a sound impulse at a certain flight-time later, say 30 ms and then the processor of the receiver module of the moving unit can easily calculate the distance to this very Systemtransmitter. Then after 3 or 4 transmits (providing Systemtransmitters are within ultrasound transmitting distance) then the moving unit has calculated enough distances to calculate its own position. The calculation of the position is very precise if the moving unit stands still, if the moving unit is moving, it may need a more complex algorithm with up to 10 historical transmits to project a fair position, and the precision of the calculated position will depend on the speed of the moving unit and historical measurements and type of algorithm.

Because there is no handshake between the receiver module and the Radiomaster any (and "unlimited") moving unit with a receiver and with the Systemtransmitter position table uploaded will be able to calculate its own position. This calculation can happen in a local microprocessor or at any attached device connected to the receiver module - with USB or radio communication - to control the moving unit if controllable like a robot or display on a smartphone or tablet actual position with wayfinding to point of interests.

### The problems to solve

a) Precise and accurate positions is depending on precise and accurate substance measurements from Systemtransmitter to receiver module. Here the traditional combination of radio for clock and transmission handling and ultrasound for distance calculation provides the best options when we also need a certain scale. More precise is electromagnetism but this is only a short distance 5 m case.
b) When using Ultrasound, you must deal with noise and reflections. Sound runs around the corner and the well-known sense and avoid solution using reflections tells a problem that reflections can be useful - in our case they represent noise.
c) The radio presents difficulties as there may be other radio devices not part of our system using the same frequencies as our units use. We also need to ensure that the Radiomasters are not disturbed by other Radiomasters from the same system. Pick any Systemtransmitterreceiver module model and you are limiting how many relations you can engage with.
d) If you want to scale up the number of Radiomasters used, or size of area, by using multiple Radiomasters you might need to shift frequencies dynamically on the moving unit from area to area. It takes time and will make the passing from area to area (hall to hall) problematic. More Radiomasters on the same frequency can introduce radio death.
e) When introducing a new moving unit into a wide area and not knowing where it is introduces a problem of reaching and accepting the right sources to be used for positioning when multiple Radiomasters and sound units are in the play.
f) Often the solution is: "more power, longer distances". This goes against the rules and the CE 300-220-1 and FCC part 15 norms. So, we need to find a modular scaling method.

### Detailed system description

This section gives an overview of the units in the system, and a more detailed description of how the units of the system work and what they do.

### 1: The Server

One Server in the System contains the list of all fixed positions of the Systemtransmitters in the system, and what Radiomaster they are bound to. This information is uploaded to the Server from the installation process. In this installation process the systemtransmitters normally sitting in the ceiling, on walls, or other fixtures are measured in 3D coordinates in the building. It can be through a traditional installation and/or an automatic calibration process like a reversed trilateration process. This information called FixedGeometry is maintained on the server. The Server connects all Radiomasters either through an independent clock-radio or a fixed RJ45 cable, depending on installation model.

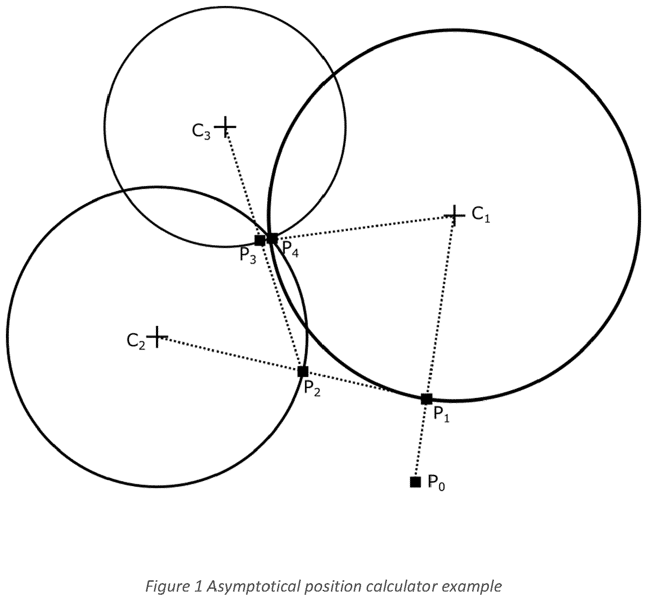

Each systemtransmitter has an overall transmission schedule. This includes that all Systemtransmitters relating to a certain Radiomaster are scheduled to emit at least one ultrasound signal one Systemtransmitter at a time during a certain loop. A loop might be fixed during a day, might include some Systemtransmitters more frequently than others, might be changed at any point in time due to information from Server, and might have different ultrasound sending power, all of it submitted from the server to Radiomaster. The overall schedule is planned and registered on the server in order for neighbor Systemtransmitters in neighbor halls to transmit at BOTH different time (at least one cycle 60-80 ms different in order to have no overlapping ultrasound in the hallways) as well as the Radiomasters loops(?) are off-set some 5-10 milliseconds (the radio package duration) so that the overall radio signals (on the very same frequency) does not overlap in the transmission and the Radiomasters then do not reduce each-others throughput. See the principal drawing Fig 1. Where each symbol represents a group of Systemtransmitters where each group of Systemtransmitter is controlled by one Radiomaster.

### 2: The Radiomaster

One Radiomaster controls a group of Systemtransmitters and receiver modules in the area it can cover (i.e. Hall, as an example 2500 m²) within the limitation of the radio. The Radiomaster is through an independent radio or a long relayed RJ45 cable connected to the Server. The Radiomaster has received a schedule from the server according to which schedule it sends out radio signals with Start Time, Systemtransmitter ID and sending power, and then synchronizes with the server. The actual Systemtransmitter transmits at the start time an ultrasound burst which is about 2-5 ms long. All receivers within radio range of the Radiomaster receives the start time (from the subscription to the Radiomaster), the ID and the sending power. Before the next loop(?) the Radiomaster synchronizes its internal timer and may receive a new schedule from the Server via the independent radio or via the RJ45 connection to the Server. The Radiomaster may be powered with a local adapter or through the RJ45 cable.

### 3) The Systemtransmitter

A Systemtransmitter listens to broadcasted radio signals. Every Systemtransmitter has a unique Identification number (ID). When a systemtransmitter hears its own ID then it transmits an ultrasound signal at the ordered power and waits until it hears its own ID again. The Systemtransmitter is equipped with one or more transmitters and these transmitters can point in preferably 3 or more different directions with 120 degree between them horizontal and preferably 45 degree downwards, corresponding to a complete circle cover. This in order to have maximum reach. The Systemtransmitter also may have a dynamic power capability so that in small halls the ultrasonic power can be adjusted in order to balance between minimizing reflections and increasing maximum distance of the ultrasound.

### 4) The Receiver Module

The receiver module is part of the moving unit. It comprises a radio which listens to the Radiomaster, and it comprises one or more ultrasound transducers each comprising its own electronic amplifying circuit which has a dynamic off level for any sound noise compared to the real ultrasound burst. This level can be adjusted to increase or decrease the sensitivity of the receiver module. The radio of the receiver module listens to the Start time and the Systemtransmitter ID, waits until it receives an ultrasound signal, raises the micro voltage level inside and if high enough it calculates the time between the transmit time and the reception time, referred to as flight time or time of flight. The receiver module communicates the timestamp and flight time and Systemtransmitter ID to a calculation unit (if the receiver module does not have that capability itself) which then can calculate the distance based on flight time and based on distances can use trilateration to calculate a position.

### 5) The Calculation Engine

The calculation engine calculates the exact position of a moving unit. It is a program which runs on a processor connected to the receiver module (or on the receiver module), i.e. through USB cable or fixed wired. The Calculation engine might operate on a controller for say a Robot or Drone or it might be on a smartphone or tablet or a system with similar capacities to store information, to process calculations, and to communicate externally. The unit with the calculation engine (the calculation unit) receives on a regular basis - once a day as an example - the updated Fixed Geometry of all Systemtransmitters and Radiomaster. The calculation unit keeps track on past distance measurements and Ultrasound level. Based on the new measurement and Ultrasound (US) levels it updates/calculates in every cycle the exact position using an algorithm for moving units as described below.

If the calculation is performed by the receiver module, this very receiver module might also from the radio at start-up time receive the actual fixed Systemtransmitter Positions in 3D coordinates and then in its own processor calculate the actual position using the position algorithm. The receiver module can then just transmit the positions and other associated information like measurement quality data via radio or USB to a local Smartphone or Tablet which then can process the information, aggregate data and run tracking analysis. Foreseen processing is aggregation of the large amount of position data, quality analysis, and a normal one time a day submission to a server for learning and historical moves, stops, delays etc. and in combination with other information.

The ultrasound receiver of the Receiver module can be overwhelmed with noise from various external sound sources. The problem with Ultrasound is how to distinguish between noise, reflections, and actual valid measurements. Due to generality and simplicity, it is preferred to use simple, cheap standard, ultrasound transducers, the Ultrasound burst is expected to be a regular wave in the normal frequencies like 28 kHz, 40 kHz or the 80 kHz.

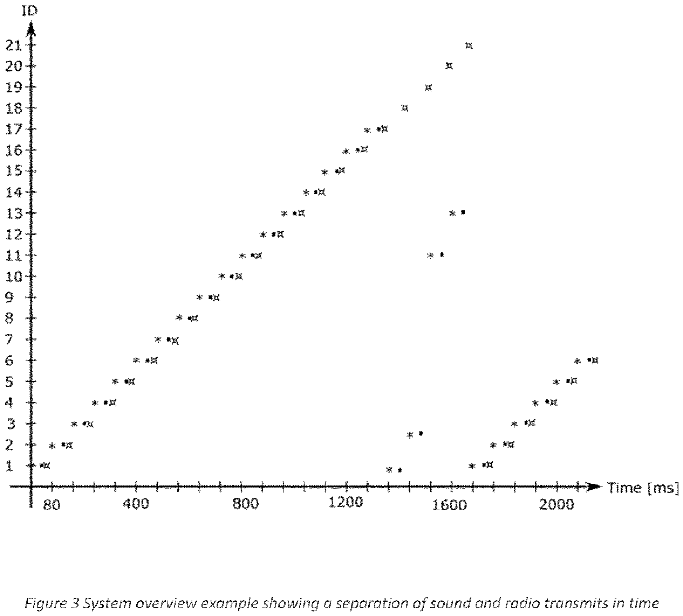

The actual general and precise distance measurement may be obtained through the following sources:
a) A general overall clock which is submitted from a server to all Radiomasters so that they do not come out of sync.
b) The Systemtransmitter sending according to a rotation schedule: A well thought out local transmit order between the Systemtransmitters in a Radiomaster area to cover the movements, either on ground or in the air. This schedule can be dynamically adjusted, say if traffic during the day shifts.
c) A Systemtransmitter may comprise up to 3 single parallelly sending transmitters with capacity up to 15 m distance in all directions (120 degree horizontal and 45 degree down). This feature can limit the number of necessary Systemtransmitters in a 1000 m2 hall to as few as 12. If applying an 80 ms measurement interval all 12 Systemtransmitters may have made a transmit in 80 ms/interval x 12 intervals = 960 ms time. Any new position might in general need 4 transmits from 4 Systemtransmitters if true 3D but can also work with 3 Systemtransmitters if operations are fixed heights (2D). If we understand the normal movements in the hall, we can schedule an order of the ultrasound bursts from 3 Systemtransmitters which at best only has a total transmission time of 80 ms/interval x 3 intervals = 240 ms. Based on the data analysis of measurements downloaded to the server from the calculation unit we can estimate the Systemtransmitter Rotation Schedule in order to obtain the most precise position with minimal dependency on the movement for the maximum number of moving units.
d) Like the Systemtransmitter the Receiver module can also have more transducers with different reception directions. On every transducer there is a dynamically adjustable (by the receiver processor it-self) cut off level for noise. The noise filter can learn from the actual measurements where the noise limit is and then adjust the cut off filter. Often that means that you increase the cut off level to the maximum when you are close to the Systemtransmitters and decrease it when you are far away from them. It cannot exclude all noise impact, but it improves the number of good measurements a lot, and it increases the dynamics of the system to support close and far away positions.
e) Systemtransmitters are directionally oriented with most power and longest distance in the center direction. Ultrasound receivers at the same time receives with maximum signal level (converts the sound pressure in the transducer to microvolts from the actual transmit) when pointing directly towards a Systemtransmitter. However, in general this situation happens seldomly with moving units on ground or in the air. Nearly all the time the receiving transducers of a moving unit receives the signal with a certain angle which may be as high as a 60-degree side angle. This means that the measured signal strength of the ultrasound may be weaker, however we are still able to use these weaker signals.
f) Normally only one Systemtransmitter is sending at a time in each measurement interval of 60-80 ms on one Radiomaster. Reflections from walls and installations to the receivers will normally be seen later than the primary signal as a reflection will have a longer flight time. In narrow rooms or hallways these reflections might stay as a resonance in the room which could cause the receiver to trigger on a reflected signal from the previous Systemtransmitter rather than the new signal from the currently sending Systemtransmitter.
g) We distinguish between primary signals and reflection noise in the following way. When any sound signal meets a barrier and reflects the power of the reflected signals drops dramatically, often 3 times or more due to that the energy moves in many new directions. An example of the straight signal level curve is shown in Fig 3. It means that, in any standard straight measurements, the signal level as well as the flight time is correlated through the curve. This curve is individual and must be made per transducer type. The shape will however be similar for all curves. When a signal is reflected then the drop-in signal level is instant, and the level does not correlate to the distance. Thus, the signal is counted as noise and jumped over.
h) If the Systemtransmitter and the receiver are not oriented towards each other the receptions will also see a lower signal level. If they point opposite no direct signal will be received. If using a Systemtransmitter with triple headed receiving transducers, the at least one transducer pointing upwards will register a signal in almost all cases. In order to apply the method (g) we use the normal curve modified to be based on the level from a 60-degree angle between System transmitter line and reception line.
   If the receiver has more triple headed receiving transducers, we use the straight measurement curve and the receiving transducer with the highest level provided no noise.

### Precision of the calculated position

The system strives toward a very high precision of the absolute positions calculated. Under ideal conditions (perfect calibration of Systemtransmitter positions, no noise on the ultrasound signal, several good distance measurements, 21 degrees Celsius air temperature) a precision of 1 cm may be achieved when standing still, and up to 50 cm when moving. Under non-ideal circumstances we aim at precisions of 10 cm when standing still and up to 100 cm when moving. The precision of the system decreases with the speed of the moving units.

The precision of the system can be improved in non-ideal circumstances by increasing the number of radiomasters, increasing the number of Systemtransmitters, changing the transducer type of the Receiver modules used to measure the ultrasound signal, improving the sensitivity of the receiver to ultrasound or by adding more transducers to the receiver board. Each of these improvements come at a cost, either in price of the receiver, price of setup, sensitivity to noise, or other costs, and are thus not always suggested for a given system.

### 6) The Position calculation principle on moving units

Different position calculation algorithms may be used, depending on whether a position has been calculated within the last e.g. 10 seconds. Algorithm1 is used when no previous positions are available, while Algorithm2 is used when a previous position is available.

### Algorithm1

Due to the way the system is set up, we calculate positions based on successive measurements rather than simultaneous measurements. Thus, to calculate a precise position of a moving unit, we need to modify the "old" distance measurements, that may be several hundred milliseconds old.

We use Neville's algorithm¹ for predicting the change in measurements. This algorithm uses previous measurements to extrapolate new measurements forward in time and is relatively simple and quick to use.
¹ *doi:10.2277*/*0521431085*

The prediction of the distance will not be perfect, and this will be one of 3 reasons why the precision of the systems will be reduced. By more accurately predicting the distance, we increase the precision significantly. The prediction algorithm is currently relatively simple, but with more system data running we may be able to improve it significantly by analyzing real world system data.

We have also experimented with using more complex algorithms for predicting the distance, however the results did not show improvement over using the simpler Neville's algorithm.

### Algorithm2

This algorithm is inspired by the prediction part of a Kalman filter. It works based on the principle that given an intersection of 3 or more circles, by iterating through a process of updating your new position to the place closest to your old position which is still on one of the circles, you will eventually converge of the intersection of the circles. This is illustrated in *Figure 1**.*

Where P₀ is our initial position. We then determine the shortest distance to the circle described by circle C₁ and update our position to that point (Pi). We then do the same to C₂ to give us P₂ and then C₃ to get P₃. As we now don't have any new circles to use, we use circle C₁ again to determine position P₄, which we then use as the final position.

The algorithm can be written in pseudo code as:

### Get current position

### Determine shortest path to circle by drawing a line between current position and centre of circle

### Get position which intersects line and circle

### Update this position as current position

This algorithm has been implemented on the calculation engine such that whenever a new distance measurement comes in, we move the new position to the place on the ball described by this distance from the System transmitter which is closest to our old position. This means that when moving our position may be slightly off, as we may not move to the exact position of the receiver since we do not iterate over all measurements. However, when standing still the position calculated will automatically converge to the actual position.

### 7) Multi Radiomaster timing solution for expanding with more radio units

Having multiple Radiomasters is a question of time division. Each Radiomaster is connected to the same Server, and thus their broadcasting time is synchronized. When the clocks of the Radiomasters are synchronized (down to 1 ms or lower), we can divide the total time into broadcasting time for each Radiomaster.

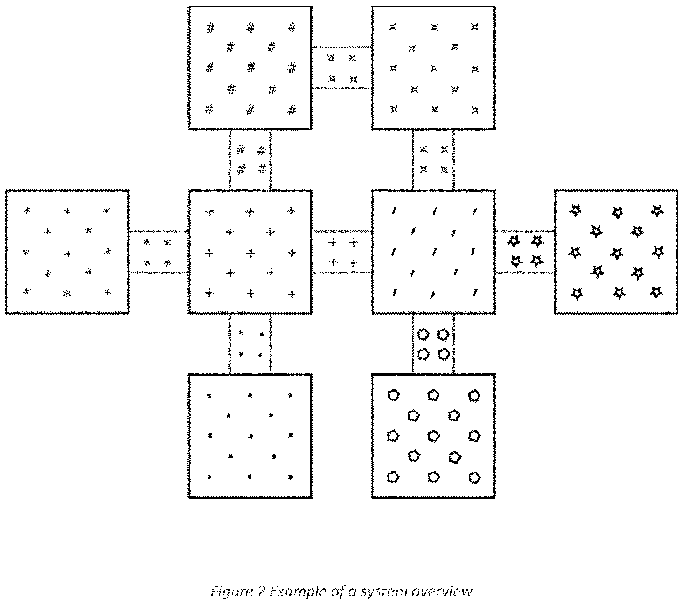

We start by mapping the placement of Systemtransmitters in the system, and then attach a Radiomaster to groupings of Systemtransmitters. Figure 2 illustrates a potential setup, containing 8 different halls, each covered by one Radiomaster, and some of the halls are connected via hallways. Each hall is covered by 13 Systemtransmitters, and each hallway is covered by 4 Systemtransmitters. Each Radiomaster may have up to 30 Systemtransmitters attached at a time, and in the example of figure 2 21 System transmitters are attached to each Radiomaster. Each symbol type on the image denotes a group of Systemtransmitters attached to one Radiomaster. The Radiomasters are not plotted in figure 2I.

As transmissions of radio signals from each Radiomaster is separated in time, it means that several Radiomasters can be placed together in the same location. The upper bound here depends on how large time difference there is between transmissions from 2 Radiomasters within signal range, and how long the measurement intervals are. At 80 ms measurement interval and with 10 ms offset between Radiomasters we can have 7 Radiomasters within range of each other. In general, the number of Radiomasters multiplied with the radio offset time must be lower than the measurement interval. (7 times 10 ms is less than 80 ms). We use 50 m as the distance our Radiomasters can transmit, which gives a 100 m range between 2 Radiomasters on the same radio and time.

The assignment of the Radiomasters offset (denoting its time offset between the other Radiomasters) is determined by the Radiomaster position. We ensure that 2 Radiomasters within range of each other have a different offset of down to potentially 5 ms, but ideally around 10 ms.

*Figure 3* shows an illustration of how the Radiomasters can be assigned System transmitters such that neither radio nor ultrasound interferes with each other. We have chosen to only show for 3 Radiomasters, however showing for 8 Radiomasters is just a matter of scaling up, while still ensuring that Radiomasters sending at the same time are at least 100 m separated, and System transmitters sending at the same time are at least 30 m separated. We have shown System transmitter ID on the Y-axis, and time on the X-axis. Time happens in increments of 80 ms, which is defined as the timeframe in this example. As there are a maximum of 21 System transmitters on 1 Radiomaster in this example we operate with a loop of 1680 ms. Note that the Radiomasters denoted with an * and a dot on *Figure 3* both repeat some of the System transmitters in the loop. In the given example, * and dot are separated by 40 ms in time on the radio, while ¤ is separated by 20 ms.

### 8) Multi systems solution for integrating more systems into one system

There are 2 ways of using multiple systems for a single solution. The first way requires that the systems are completely separated in terms of radio and ultrasound, for example it could be in different buildings outside of Radiomaster range. This would allow for 2 systems to operate independently of each other, while still allowing moving units to move from one system to the other if they know all Systemtransmitter positions.

The other way is to synchronize the time between the systems. This will require an extra server, thus if there is a total of 3 systems integrated into 1 solution, we would need 4 servers. One server would then be the "master server", which would dictate the time to all the other servers. This requires that the servers are placed on the same LAN, and that each is connected to the main server, while still connected to both the wifi network, the Radiomasters and the internet. We would require synchronization of the clocks on the servers down to roughly 1 ms, which would allow us to operate any number of systems together under 1 solution. The time synchronization would be realized via an integrated function in the server hardware, which allows it to take input regarding time from either its own clock, or from an outside clock.

It should be noted that in both solutions the Systemtransmitter location file which is generated for each system is merged into one file, which is given to each tablet.

### 9) Start position determination for any new unit

This system does not have a handshake function between the Systemtransmitters and the Receiver modules, and it has multiple Radiomasters on the same frequency. This requires a strategy making it possible to distinguish between which of the Radiomasters a moving unit is listening to at a given time. When we already have a position calculated, it is a relatively simple task to determine the correct Radiomaster to listen to. However, when we do not have a previous position to use, we must use a more complex algorithm. This will be the case for a moving unit entering the system, or if a moving unit is restarted within the system. The problem essentially becomes to determine which Radiomaster the moving unit is listening to and where it is. The receiver module of the moving unit has the following measurements and timers to use:
- The moving unit receives a radio signal with a power (RSSI) transmitted to Systemtransmitter x
- This radio signal identifies the Radiomaster controlling System transmitter x
- The Receiving module of the moving unit receives an ultrasonic burst and the level of the ultrasonic burst, but the moving unit does not know initially from which Systemtransmitter the ultrasonic burst is sent
- The moving unit knows the normal time and order between Radiomasters sending but not the absolute time
- Any receiver may have 4 individual timers in HW which are used to determine the rise time of the ultrasound signal.
- The receiver can track any number of different Radiomasters using internal software clocks
- The moving unit can either wait or the moving unit can move the receiver to a new position

The task at hand is to get the receiver to come into the right timeframe and understand from what positions the moving unit receives the ultrasonic bursts. This is not obvious due to the fact that ultrasound is moving slowly, and the receiver can detect ultrasound from more than 15 m of distance (about 45 ms).

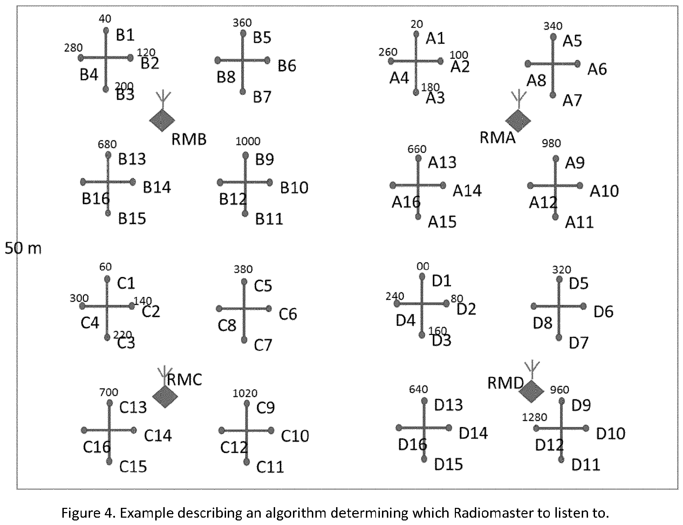

A method used to determine the initial positions within 5 seconds, often faster, are described in *Figure 4**.* In this case there are 4 Radiomasters, which the receiver can hear (RMA, RMB, RMC, RMD), each of the Radiomasters controls 16 Systemtransmitters in a cell. The 4 cells are setup in a location are of 2500 m2. Four Systemtransmitters are positioned in a square. As an example, the in the C-loop Systemtransmitter c1 transmits at time 60 ms, and C6 transmits at 460 ms. The measure interval is 80 ms. The transmit time is set intelligently to avoid any neighbor transmitter to transmit within the measurement interval.

The following example is illustrated in Figure 4 where a receiver of a moving unit can hear 4 Radiomasters:
1) In the very first 3 timeframes where the moving unit hears the 4 Radiomasters each sending a radio signal naming a Systemtransmitter to send.
   a) Assume Radiomaster A (RMA) lets Systemtransmitter 1 send. The receiver records
      i) 0 ms <RMA, Systemtransmitter 1, RSSI 50), RSSI 50 here out of max 255,
      ii) 10 ms (from 0) he hears <RMB, Systemtransmitter 11, RSSI 120>,
      iii) 30 ms (from 0) he hears <RMC, Systemtransmitter 111, RSSI 240>,
      iv) 40 ms (from 0) he hears <RMD, Systemtransmitter 1111, RSSI 38>.
      v) Then 4 seconds later the moving unit detects an ultrasonic signal with level 80 (out of 100).
   b) Then the assumed 80 ms timeframes has lapsed.
   c) The next (2.) timeframe proceeds and the moving unit receives:
      i) After 10 ms: <RMA, Systemtransmitter 2, RSSI 61>
      ii) After 20 ms: <RMB, Systemtransmitter 22, RSSI 128>
      iii) After 40 ms: <RMC, Systemtransmitter 222, RSSI 230>
      iv) After 48 ms: Ultrasonic burst level 95>
      v) After 50 ms: <RMD, Systemtransmitter 2222, RSSI 45>
   d) The next (3.) timeframe proceeds and the moving unit receives:
      i) After 20 ms: <RMA, Systemtransmitter 3, RSSI 58 >
      ii) After 30 ms: <RMB, Systemtransmitter 33, RSSI 125>
      iii) After 50 ms: <RMC, Systemtransmitter 333, RSSI 232>
      iv) After 60 ms: <RMD, Systemtransmitter 3333, RSSI 53>
      v) After 66 ms: Ultrasonic burst level 82>
2) Analysis proceeds: The receiver makes a priority, what is the most likely Radiomaster and from what Systemtransmitter it received the ultrasonic signal.
   a) We start by looking at the measurements for each timeframe individually. The distances are first checked to see if they fall within the allowed parameters for the distance (over 1.5 m and below 16 meters), and the distances are removed if they are not within allowed distance. This eliminates RMD (distance 1360 mm) for this timeframe.
   b) Then we compare the distance and ultrasound level to an optimal ultrasound level/distance curve (Figure 6). For an ultrasound level of 80, we cannot physically have distances longer than around 6 meters. This removes RMB (distance 11560 mm) and RMA (distance 14960mm). We only have 1 Radiomaster left, which is the one we choose.
   c) This is repeated for each timeframe. RMD is not part of this timeframe, because the Radiomaster signal arrived after the ultrasound signal. We find that RMA (distance 12920 mm) and RMB (distance 9520 mm) are disqualified for level. For the third timeframe we have that no one are disqualified for distance, but RMA (distance 15640mm) and RMB (distance 12240 mm) are disqualified for level.
   d) For the third timeframe we now have 2 possible distances that can potentially be used for positioning. We next test if the RSSI for any of the Radiomasters are above 200. Meaning we are very close to the given Radiomasters. We see that RMC has an RSSI of 230, meaning we are likely just below this master, and the masters are always placed close to centered on the area covered. This means that for this example we are listening to RMC all three times and uses its 4 measurements to calculate a position.
   e) If there is more than 1 Radiomaster as the only option at this time, we then start comparing if the distances found can lead to us calculating a position.
   f) If more than one specific set of distances can be used to calculate a position, we wait until the next loop, and start comparing these distances to see which of the positions are feasible.
3) The Algorithm here give only 1 option: RMC and the position. This is then confirmed in a second 3 timeframe measurement cycle in the next loop of the Radiomaster.
4) A large concern for the system is to determine which of the Radiomasters that are within range and which it should listen to when it receives a new measurement. Each different Radiomaster would give a different time difference between sending and receiving, which would again mean a different distance calculated. When we already know the approximate position of the cart this is not a large concern, as we can calculate the distance between the last known position and all the Systemtransmitters in question and determine the correct Systemtransmitter based on this.

The algorithm described above is also described below in a more general sense:
*Check distance*
   - *If distance < 1500 mm, remove from list*
   - *If distance > 16000 mm, remove from list*
*Compare distance and level (use formula for level based on distance (Figure 6))*
   - *If measured level > calculated maximum level based on distance, remove from list*
   - *If measured level < calculated minimum level based on distance, remove from list*
*Compare RSSI*
   - *If RSSI > X (determined by optimal RSSI of 10 m from Master) choose this measurement*

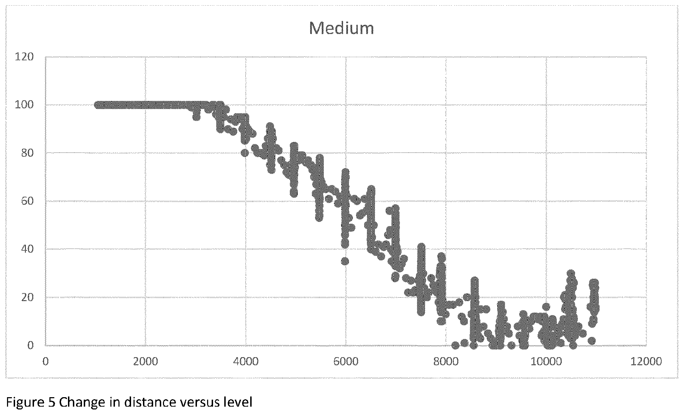

The maximum level is based on optimal conditions for the ultrasound, and the formula for it is found based on measurements like the one shown in *Figure 5**.* We have 3 different formulas depending on the Systemtransmitter sending power, which is known by the receiver.

In short, this algorithm first checks if there are any distances that are too short (> 1.5 m), or significantly too long (< 16 m). Once this is done, we compare the measured distance to the level of the signal. This will show if a long measurement has a very high level, that this is not possible. After this we compare the *RSSI* of the message, to determine if there are any masters that are particularly close, which will indicate that it is more likely to be the correct once.

Should this algorithm still leave us with more than 1 Radiomaster which can potentially be correct, we then try to determine if we can calculate a position based on the given distances.

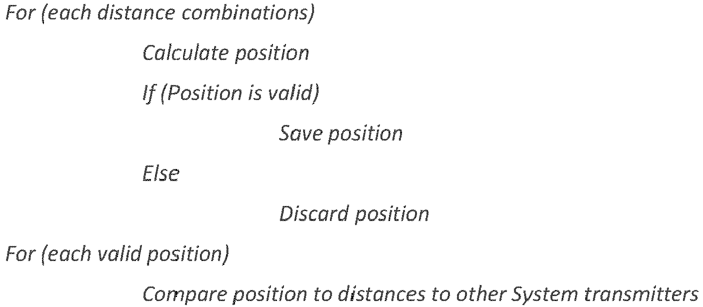

Lastly, if we still cannot determine the correct Radiomaster to listen to, we try to calculate the different positions we would get and see if there are any which have large changes in position in a very short time.

The last option is to look at pure *RSSI* between receiver and Radiomaster and choose the Radiomaster which has the highest RSSI.

If nothing absolute, then re-do the cycle again and/or move the moving unit.

### 10) Utilizing positions at central location

The positions on any moving unit are timestamped based on the time of calculation. All positions are recorded as 3 Dimensional coordinates in the unique coordinate system described above for the actual installation in a simple and compact text-based format. Thus, the actual positions correlate easily to CAD drawings or installation drawings in the building. Using a simple Wi-Fi communication between the moving unit and the central server all position data can be stored easily and accumulated locally for later communication to the server or be transmitted in real time for central monitoring. Using Wi-Fi, the central server or any third-party system like a warehouse management system might also communicate directions or targets to the local moving unit in the same coordinate system.

### 11) Future improvements to the system

To improve the precision of the calculated position the following extra methods advances the system even further in precision of the moving unit:
The main concern with the precision currently is that we calculate it based on "old" measurements, where the receiver may have moved between the distance measurements of the 3 System transmitters used to calculate the position. One way we envision that the system will be improved is by removing this requirement of calculating based on old distance measurements. The receiver that is used is made such that it has 3 different inputs for an ultrasound receiver. Instead of using the same ultrasound transducer on each entrance, we instead envision that we use a 40 KHz, a 45 KHz and a 35 KHz ultrasound transducer. We then also change our System transmitters, such that one System transmitter has 40 KHz transducers, one has 35 KHz and one has 45 KHz which transmits at the same time. By being strategic when placing these System transmitters, we can then use the 3 different ultrasound signals to calculate the position at the exact moment when the ultrasound signal is received based on all new measurements.

Using an IMU (Inertial Measurement Unit) to calculate direction of receiver and speed to, which will allow us to calculate positions more often, as the IMU will give measurements more often than the ultrasound system can. Preferably we use the IMU on the receiver or on the tablet/smartphone to predict the position of the unit between ultrasound signals.

The receiver is made to be ready for an improvement allowing more transducers connected to the print than 1. This can improve the positioning by using this in either of 2 ways. The first way to use it is to make a triple headed receiver similar to the Systemtransmitter, giving us better ultrasound signals. This will give us more measurements to use for positioning and will improve the measurements that come from far away (>12 meters). The other way it may be used to improve the system is the place the 3 transducers in a triangle on the object being tracked. This will allow us to calculate 3 positions for the unit, where we the distance and relation between them is known. This will allow us to determine if one of the measurements is incorrect, as it will in that case not be in the described triangle. It may also help in determining which Radiomaster to listen to, as increasing the length of all measurements, will not necessarily mean that they will all lie on the same triangle. Using this information, we may be able to better determine which System transmitter to listen to. Lastly, by having more than 1 position of the tracked unit, we can determine the orientation of the unit quite easily, even when standing still.

The present invention may provide the following methods:
1. A method (based on the said principles) to determine an accurate real time position indoor of many moving trolleys or shopping carts in a large supermarket or shopping center.
2. A method (based on the said principles) to determine an accurate real time position indoor of many moving forklifts, robots or AGV's in warehouses or factories with one or more halls and large warehouse or factory.
3. A method (based on the said principles) where each accurate position of any moving unit can be stored on the local vehicle and in real time or later sent to a central sever for real time overview or analysis of all units in shopping areas, warehouses, factories and the like.
4. A method (based on the said principles) where any moving unit can subscribe to its own position and display that actual position locally together with ordered paths in XYZ to follow communicated from the central server or any third-party system.
5. A method (based on the said principles) where further guidance from the central server or any third-party system or from another system can be combined with the actual vehicle position to regulate the movement for safety, speed limitations, or obstacles described on the server.
6. A method (based on the said principles) where incidents registered by a third-party detection system on the moving unit are associated with the actual position and further stored or transmitted to the central server.
7. A method (based on the said principles) where robots or autonomous moving vehicles navigate in large areas based on targets and paths from a central calculated route and a local controller on the moving unit guides or operates the moving units with specified deviations from the said route to the target.
8. A method (based on the said principles) for determination of initial position in systems with more Radiomaster cells at the very same frequency using more ultrasonic to determine distances from System transmitter to receiver on tracked units.
9. A method (based on the said principles) for successive 3D positioning of moving units with a valid initial position based on extrapolation of single distance measurements to/from System transmitters at fixed positions within the reach of the distance measurement technique, preferable ultrasonic techniques.
10. A method (based on the said principles) for fluent determination of positioning for moving units across large indoor areas (10.000 m2 and above).
11. A method (based on the said principles) for simultaneously positioning of many indoor moving units based on a subscription (no handshake) to the radio frequency and the knowledge of System transmitters XYZ position.
12. Further extended area coverage beyond one single system by adding more systems together with radio clock control from an extra overlying server.

## Claims

1. A positioning system for indoor precise positioning of moving units comprising
- a plurality of systemtransmitters where each systemtransmitter has a unique identification code and comprises a receiver configured to constantly listening to a radio signal and a transmitter configured to transmitting an ultrasound signal, all systemtransmitters are fixed units, i.e. they are stationary;
- one or more radiomasters where each radiomaster comprises a radio receiver configured to receive registered information from at least one server and a radio receiver configured to receive a clock signal, also each radiomaster comprises a radio transmitter configured to transmit a radio signal to a group of systemtransmitters related to the radiomaster;
- the at least one server comprising
-- a register of all systemtransmitters of the system including a 3D position of each systemtransmitter recorded in a fixed geometry system file,
-- a register of which radiomaster controls which systemtransmitters,
-- a transmission schedule defining a time period or loop for each radiomaster during which time period or loop a sequence of signals are send from a radiomaster to all its related systemtransmitters, and
-- comprising a server transmitter configured to transmit registered information and a server transmitter configured to transmit a clock signal;
- a plurality of moving units, each moving unit comprising a receiver module configured to constantly listening to radio signals from the one or more radiomasters belonging to the system and configured to receive ultrasound signals from one or more systemtransmitters;
- each moving unit comprises or has access to storage means configured to store data of the fixed geometry system and comprises or has access to a controller or processor configured to calculate the flight time for the ultrasound signals and further comprises or has access to a controller or processor configured to calculate a real-time position based on this information
**characterized in that** the radiomaster(s) is configured to transmit a radio signal at time T1 to a systemtransmitter with a specified identification code which radio signal is received at time T1 by the systemtransmitter with the specified identification code and by a receiving module of a moving unit being within range of the radio signal, the radio signal identifies the specified systemtransmitter to the moving unit.

2. A positioning system according to claim 1, wherein the radio transmitters of two or more radiomasters of the positioning system, optionally all radiomasters of the positioning system, are configured to transmit radio signals on one i.e. the same frequency during operation, allowing moving units to listen to signals from two or more radiomasters in the system, e.g. all radiomasters in the system, without modifying the receiving module of the moving unit.

3. A positioning system according to any previous claim, wherein one or more or each moving unit is/are configured to operate exclusively as subscriber(s) relative to the radio i.e. the moving units do not comprise a transmitter configured to transmit signals to the radiomaster(s) during operation.

4. A positioning system according to any previous claim, wherein each systemtransmitter of the system is controlled by one radiomaster and the at least one server defines a group of systemtransmitters being controlled by one or by each radiomaster.

5. A positioning system according to any previous claim, wherein the server transmitter configured to transmit the registered information from the server to the radiomaster(s) comprises an ethernet cable.

6. A positioning system according to any previous claim, wherein the controller or processor of the moving unit comprises either a local microprocessor or a device connected to the moving unit e.g. by USB or by wireless communication or similar.

7. A positioning system according to any previous claim, wherein a moving unit comprises means for displaying information of real-time position and/or comprises means for accumulation of position data, and/or comprises means for real time transmitting position data to a central server or another device.

8. A Position system according to any previous claim wherein the server in every transmission slot can transmit to the radios any modified or new order of the system transmitters, i.e. with purpose of optimizing for any actual load or behavior during a day of the moving units.

9. A Position system according to any previous claim wherein a moving unit without a previous position registration is configured to determine from which radiomasters the moving unit is receiving signals and thus from which systemtransmitter the moving unit is receiving ultrasonic signals, making the moving unit able to calculate a first position in the system within normally 3-5 seconds.

10. A positioning system according to any previous claim, wherein each systemtransmitter of the system comprises a transmitter configured to send a radio signal to the related radiomaster confirming the working state of the systemtransmitter.

11. A method for detecting positions of each of a plurality of moving units in a positioning system according to claim 1-10, wherein
a) one radiomaster transmits a radio signal at time T1 to a systemtransmitter with a specified identification code;
b) the radio signal is received at time T1 by the systemtransmitter with the specified identification code and by a receiving module of a moving unit being within range of the radio signal, the radio signal identifies the specified systemtransmitter to the moving unit;
c) upon receipt of the radio signal the systemtransmitter with the specified identification code transmits an ultrasonic signal;
d) a receiving module of a moving unit within range of the ultrasonic signal receives the ultrasonic signal at time T2, and upon receipt of the ultrasonic signal, a controller either being part of the moving unit or being available to the moving unit calculates the flight time T2-T1; the receiving module is configured to distinguish a straight ultrasonic signal from a reflected signal ensuring that the ultrasonic signal is transmitted from the systemtransmitter with the specified identification code,
e) having obtained the flight time for the ultrasound signal and as the moving unit has access to data defining the position of the specified systemtransmitter, a position for the moving unit is calculated by algorithm(s) by a controller either being part of the moving unit or being available to the moving unit;
- steps a) to e) are repeated according to a time schedule for all systemtransmitters related to the one radiomaster.

12. Method according to claim 10, wherein two, more or all of the radiomasters of the system sends radio signals at one radio frequency and the receiving modules of each moving unit listens to this one radio frequency.
